# EUROPEAN PATENT APPLICATION

(11) **EP 2 017 981 A1**
(43) Date of publication of application: **21.01.2009**
(21) Application number: 07290887.4
(22) Date of filing: 16.07.2007
(51) Int. Cl.: H04B 10/155, H04B 10/158, H04B 10/18, H04L 27/26, H04J 14/02

(54) **Method to increase the SNR in optical OFDM systems**

(71) Applicant: Alcatel Lucent, 75008 Paris (FR)
(72) Inventor: Franz, Bernd, 74336 Brackenheim (DE); Buchali, Fred, Dr.-Ing., 71336 Waiblingen (DE)
(74) Representative: Schäfer, Wolfgang

(57) **Abstract**

In order to increase the signal-to-noise ratio in an optical OFDM system (1a) it is suggested to generate a modified data signal (18) by applying a first non-linear functionality (17) to the data signal (16). The non-linear functionality (17) causes at least lower amplitudes of the data signal (16) to be amplified. The non-linear functionality (17) does not cause the highest amplitude to be amplified. The optical signal is then modulated based on characteristics of the modified data signal (18) for transmission. Preferably, the first non-linear functionality (17) further causes higher amplitudes of the data signal (16) to be attenuated. It is further suggested to receive the transmitted data signal and convert it into a received data signal (48). A second non-linear functionality (47) is applied to the received data signal (48) in order to generate a de-modified data signal (46) causing at least lower amplitudes of the received data signal (48) to be attenuated and not causing at least the highest amplitude to be attenuated. Based on the de-modified data signal (46), de-multiplexed parallel data signals (43, 44) are generated. Preferably, the second non-linear functionality (47, 47a) further causes higher amplitudes of the received data signal (48) to be amplified. It is further suggested to provide a transmitter (2a), a receiver (3a), and a system (1a).

## Description

The invention relates to a method for optical data transmission comprising the steps of generating a data signal utilizing orthogonal frequency division multiplexing, modulating an optical signal based on characteristics of the data signal, and transmitting the modulated optical signal.

The invention also relates to a transmitter for transmitting optical data using orthogonal frequency division multiplexing, the transmitter comprising a modulator for modulating an optical signal based on characteristics of a data signal, the data signal comprising lower amplitudes and higher amplitudes.

Furthermore, the invention relates to a receiver for receiving an optical orthogonal frequency division multiplexed signal, the receiver comprising a transformer for transforming the received optical signal into a received data signal, the received data signal comprising lower amplitudes and higher amplitudes.

Finally, the invention relates to a system for optical data transmission, the system comprising a transmitter for transmitting optical data using orthogonal frequency division multiplexing and a receiver for receiving an optical orthogonal frequency division multiplexed signal from the transmitter, the transmitter comprising a modulator for modulating an optical signal based on characteristics of a data signal, the data signal comprising lower amplitudes and higher amplitudes, and the receiver comprising a transformer for transforming the received optical signal into a received data signal, the received data signal comprising lower amplitudes and higher amplitudes.

Data transmission based on orthogonal frequency division multiplexing (OFDM) is commonly known and used for example in DAB (Digital Audio Broadcasting) systems or ADSL (Asymmetric Digital Subscriber Line) broadband access via POTS (Plane Old Telephone Service) copper wiring. OFDM enables to encode each of multiple data channels into at least one of a set of closely-spaced orthogonal subcarriers, wherein the subcarriers are mapped on integer multiples of 1/T, where T is the duration of one of the parallel data bits that have to be transmitted from the data channels. Thus, the subcarriers are orthogonal. The waveforms of each of the individual subcarriers are summed, i.e. multiplexed, to produce a block of transmitted waveform for each set of parallel data bits. At the receiver, each subcarrier is separated, i.e. splitted, and then decoded.

Using OFDM for optical data transmission can be beneficial since it allows the symbol rate to be reduced, thus increasing tolerance to chromatic dispersion and polarisation mode dispersion, which in turn allows to transmit data on an increased distance.

In the time domain, the OFDM signal mostly has a small amplitude with occasionally high amplitude. This means, that the OFDM signal has a small variance with high maxima, which corresponds to a high peak-to-average power ratio (PAPR). In order to avoid non-linearities, e. g. clipping, on the one hand and to limit the power consumption on the other hand, most of the signal has a poor signal-to-noise ratio (SNR), when noise, especially optical noise, is added.

It is therefore an object of the invention to provide method and apparatus for increasing the signal-to-noise ratio in an optical OFDM system.

### Summary of the invention

This object is solved by a method for optical data transmission, wherein a modified data signal is generated by applying a non-linear functionality to the data signal. The non-linear functionality causes at least lower amplitudes of the data signal to be amplified. However, the non-linear functionality is further characterized in that at least the highest amplitude is not amplified. The optical signal is then modulated based on characteristics of the modified data signal.

The inventive method enables to amplify lower amplitudes of the data signal. This has the effect that the PAPR is reduced and the signal-to-noise ratio (SNR) for the lower amplitudes is increased. Since the OFDM signal mostly has a small amplitude with occasionally high amplitude, the average signal-to-noise ratio is increased.

Preferably, the first non-linear functionality further causes higher amplitudes of the data signal to be attenuated, which means that the first non-linear functionality has a compressing characteristic. This embodiment enables to increase the SNR and to decrease non-linearities, in particular clipping, since the amount of the highest amplitude is decreased.

Advantageously, the degree of amplification and/or attenuation depends on the amplitude. This allows e.g. to increase the amplification of a signal, the lower the amplitudes of the signal are and to increase the attenuation of a signal, the higher the amplitudes of the signal are. This further enables to increase the SNR, since the distances between frequently occurring (low) amplitudes can be increased, wherein the distances between infrequently occurring high amplitudes are not increased at all or even decreased.

The non-linear functionality preferably is realized as a logarithmic function or a power function. These types of functions are well-known and can be implemented as an electrical circuit or as a digital function. Examples for such non-linear functionalities are y = x^{½}, y = x^{¼}, or y = log(x).

According to a preferred embodiment of the present invention, the method further comprises the steps of generating complex-valued parallel analog data signals and electrically mixing the complex-valued parallel analog data signals. The complex-valued parallel analog data signals could be generated for example using an inverse fast Fourier transformation (IFFT) followed by a parallel-to-serial conversion and a digital-to-analog conversion, before electrically mixing the complex-valued parallel analog data signals. The electrically mixed analog data signal is then modified by applying the first non-linear functionality.

According to another embodiment of the present invention, modified data signals are generated based on the complex-valued parallel analog data signals, prior to electrically mixing the modified parallel analog data signals.

According to still another embodiment of the present invention, modified data signals are generated based on complex-valued parallel digital data signals, prior to performing the digital-to-analog conversions and electrically mixing the signals. In this embodiment, the non-linear functionality is preferably realized by a digital functionality. Advantageously, the non-linear functionality is realized by the digital-to-analog converter in that non-equidistant levels are applied for converting the digital data signals into modified analog data signals.

According to a preferred embodiment of the present invention, the transmitted modulated optical signal is received and transformed into a received data signal. A second non-linear functionality is then applied to the received data signal, wherein the second non-linear functionality causes at least lower amplitudes of the received data signal to be attenuated and wherein the second non-linear functionality does not cause at least the highest amplitude to be attenuated. Based on the de-modified received data signals, de-multiplexed parallel data signals are generated. Preferably, the second non-linear functionality further causes higher amplitudes of the data signal to be amplified.

The second non-linear functionality can be realized as the inverse of the first non-linear functionality. Thus, the de-modified data signal corresponds to the data signal prior to transmitting, and in particular prior to applying the first non-linear functionality.

According to another preferred embodiment of the present invention, the second non-linear functionality is realized as a quasi-inverse of the first non-linear functionality. In the present context, a quasi-inverse means that the second non-linear functionality is not the exact inverse of the first non-linear functionality, but has a similar effect. In practical realization, applying a quasi-inverse non-linear functionality often results in a de-modulated data signal that is sufficiently precise in order to determine the original information from the received data signal. Thus, assuming that both functionalities are represented by a mathematical function, wherein f(x) denotes the first function and g(x) denotes the second function, the composition f*g is the identity function id(x), if the second function is the inverse of the first function, i.e. f = g⁻¹,. If the second function is the quasi-inverse of the first function, the resulting composition is f*g ≈ id(x). The advantage of using a quasi-inverse functionality is that this often reduces the operating and implementing complexity.

Preferably, the second non-linear functionality is adapted to at least one characteristic of the optical noise. The adaption could be performed by pre-adjusting the second non-linear functionality. In particular, the adaption could be performed based on determination of the optical noise. Since the optical noise is converted into non-linear noise while transforming the received optical signal, the second non-linear functionality could be adapted in order to further increase the signal-to-noise ratio. The adaption could be performed by having the second functionality parameterised and adjusting one or more parameters of the second non-linear functionality.

According to a preferred embodiment of the present invention, the method further comprises the step of generating complex-valued parallel data signals by splitting the de-modified received data signal and generating de-multiplexed parallel data signals based on the complex-valued parallel data signals.

According to further embodiments of the present invention, the received data signal is split in order to generate complex-valued parallel analog data signals and then the second non-linear functionality is applied to the complex-valued parallel analog data signals in order to generate de-modified parallel analog data signals. However, it is also conceivable to apply the second non-linear functionality not until converting the complex-valued parallel analog data signals into complex-valued parallel digital data signals using an analog-to-digital converter, which means that the second non-linear functionality could be realized by a digital functionality, in particular by applying non-equidistant levels when converting the complex-valued parallel analog data signals into de-modified digital data signals.

The object is also solved by a transmitter as mentioned above, wherein the transmitter comprises a modifier realizing a non-linear functionality, wherein the modifier is adapted to amplify at least lower amplitudes and to not amplify at least the highest amplitude.

The object is also solved by receiver as mentioned above, wherein the receiver comprises a modifier realizing a non-linear functionality, wherein the modifier is adapted to attenuate at least the lower amplitudes and to not attenuate at least the highest amplitude of the received data signal.

Preferably, the transmitter and receiver are adapted to execute the inventive method.

The object is further solved by a system as mentioned above, wherein the system comprises the inventive transmitter and the inventive receiver.

Additional features and advantages of the present invention are described in the following detailed description of the invention and the figures.

### Brief description of the figures

Figure 1 shows a first embodiment of the inventive system;
figure 2 shows a second embodiment of the inventive system; and
figure 3 shows a third embodiment of the inventive system.

### Detailed description of the invention

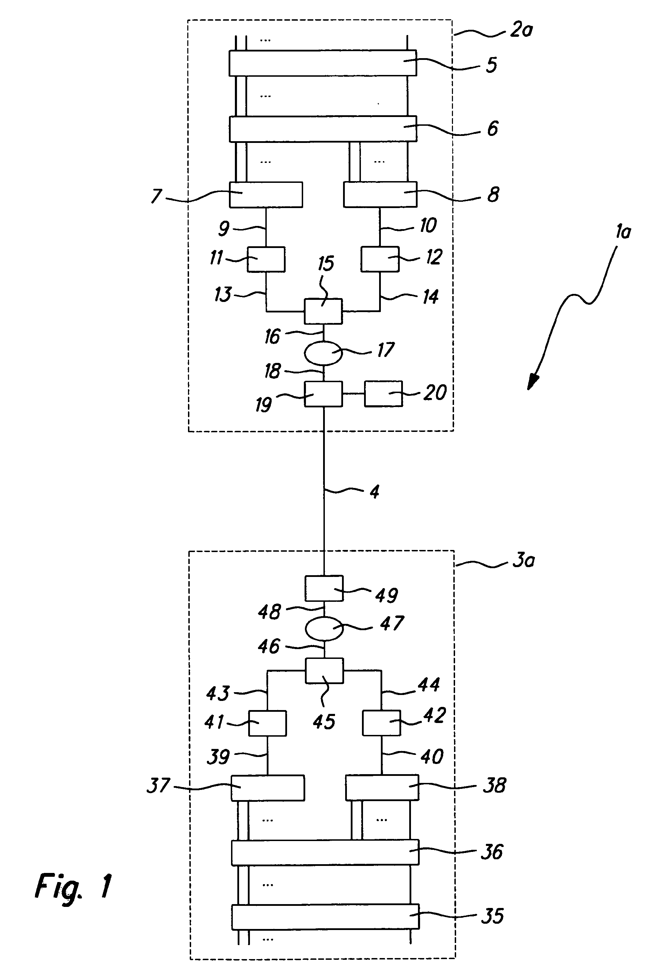

Figure 1 shows a system 1a comprising a transmitter 2a and a receiver 3a. The transmitter 2a and the receiver 3a are connected via an optical fiber 4 for optical data transmission. However, transmitter 2a and receiver 3a could also be connected via several further information processing elements, and in particular via several optical information processing elements, such as optical routers or amplifiers.

The transmitter 2a comprises an encoder 5 for encoding a predefined number of data bits. The encoder 5 could for example be realized using a quadrature-amplitude-modulation (QAM), enabling to encode pairs of data bits as four possible phases.

The transmitter 2a further comprises a transformer 6. The transformer 6 could be realized by performing an inverse fast Fourier transform (IFFT) on the parallel encoded signals received from encoder 5. If, for example, each QAM channel is presented to an input of the IFFT, the IFFT will produce an output comprising complex-valued parallel digital data signals.

The transmitter 2a further comprises parallel-to-serial converters 7, 8, wherein the parallel-to-serial converter 7 converts the real part of the complex-valued parallel digital data signals into the real part of a complex-valued serial digital data signal 9 and the parallel-to-serial converter 8 converts the imaginary part of the complex-valued parallel digital data signals into an imaginary part of a complex-valued serial digital data signal 10.

The transmitter 2a further comprises digital/analog converters 11, 12 for converting the real part and the imaginary part of the complex-valued serial digital data signals 9, 10 into complex-valued analog data signals 13, 14.

The transmitter 2a also comprises an electrical mixer 15, an electric circuit block realizing a first non-linear functionality 17, a modulator 19 and an optical light source 20. the optical light source 20 can be realized as a laser diode.

The electrical mixer 15 is adapted to generate an analog data signal 16 by electrically mixing the complex-valued analog data signals 13, 14. The analog data signal 16 is then fed to the electric circuit block in order to apply the non-linear functionality 17 to the analog data signal 16. The non-linear functionality 17 causes the lower amplitudes of the analog data signal 16 to be amplified. Advantageously, the non-linear functionality 17 further attenuates the higher amplitudes of the analog data signal 16, which means, that the non-linear functionality 17 also compresses the analog data signal by attenuating the higher amplitudes. Furthermore, the non-linear functionality 17 increases the amount of distance between different lower amplitudes by amplifying the lower amplitudes and thus amplifying the amount of differences between the lower amplitudes. This has the effect that the amplitudes of the modified data signal 18 are more equidistant than the distances between the amplitudes of the data signal 16. Thus, the average signal-to-noise ratio is increased. In order to optimise the SNR, the degree of amplification might be based on the amplitude of the data signal 16.

The modified data signal 18 then drives the modulator 19 in order to modulate the signal generated by e.g. the optical light source 20, preferably adjusted by a bias (not shown in figure 1). The modulator 19 could be realized as a MZI (Mach-Zehnder Interferometer), generating an intensity-modulated optical data signal for transmission via optical fiber 4.

The receiver 3a basically allows a reverse processing of the received optical signal. Therefore, the receiver 3a comprises an optical/electrical converter 49, preferably also comprising an optical amplifier (not shown in figure 1). The optical/electrical converter 49 generates a received analog data signal 48. Since the transmitter 2a has modified the analog data signal 16 in order to generate modified data signal 18, the received data signal 48 resembles the modified data signal 18.

In order to demodulate the received data signal 48, receiver 3a provides an electric circuit block realizing a second non-linear functionality 47. The second non-linear functionality 47 could be the inverse of the first non-linear functionality 17. However, it is also conceivable that the second non-linear functionality only realizes an approximated inverse of the first non-linear functionality 17.

Receiver 3a further comprises an electrical splitter 45 for generating complex-valued analog data signals 43, 44 comprising an imaginary part 44 and a real part 43. The complex-valued analog data signals 43, 44 are then digitized by analog-to-digital converters 41, 42, resulting in complex-valued digital data signals 39, 40.

Receiver 3a further comprises serial-to-parallel converters 37, 38 in order to generate parallel data signals, each of them are presented to an input of a transformer 36. Transformer 36 could be realized as a fast Fourier transform (FFT) for generating signals that are then decoded by a decoder 35, in order to generate parallel data bits that correspond to the original data channels.

Thus, the system 1a realizes the inventive method by utilizing the first non-linear functionality 17 in order to amplify lower amplitudes of the analog data signal 16 and by attenuating higher amplitudes of the analog data signal 16. The non-linear functionality 17 preferably comprises a logarithmic function or a power function, wherein the non-linear functionality 17 might be chosen to characteristics of the transmitter 2a, e. g. based on data encoding performed by encoder 5, the implementation of transformer 6 or electrical and optical characteristics of modulator 19, light source 20 or a current bias.

Receiver 3a, receiving the modulated optical signal demodulates the signal by applying the second non-linear functionality 47. Therefore, the second non-linear functionality 47 is realized as the inverse or quasi-inverse of non-linear functionality 17. Furthermore, non-linear functionality 47 could further be enhanced by a functionality which adapts the received data signal to the optical noise that arose while transmitting the signal and that is converted into non-linear noise by the optical/electrical converter, e. g. by the photodiode.

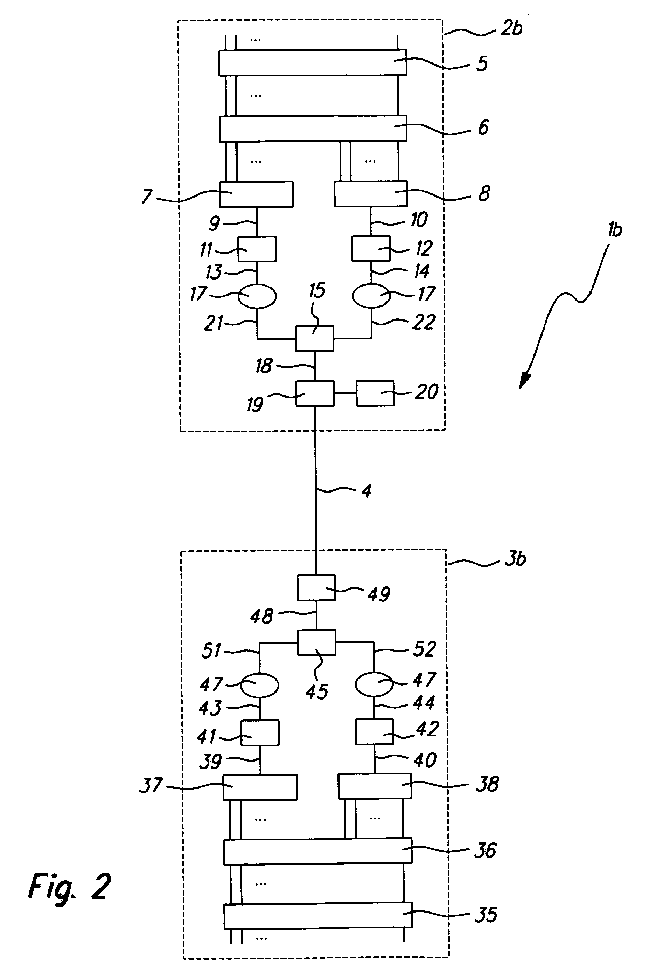

Figure 2 shows a system 1b comprising transmitter 2b and receiver 3b. Transmitter 2b comprises two non-linear functionalities 17, each of them located at one path of the complex-valued analog data signals 13, 14 in order to generate complex-valued modified analog data signals 21, 22. The complex-valued modified analog data signals 21, 22 are then electrically mixed.

Receiver 3b shows an architecture corresponding to transmitter 2b, in that receiver 3b comprises two non-linear functionalities 47, each located in the complex-valued analog data path.

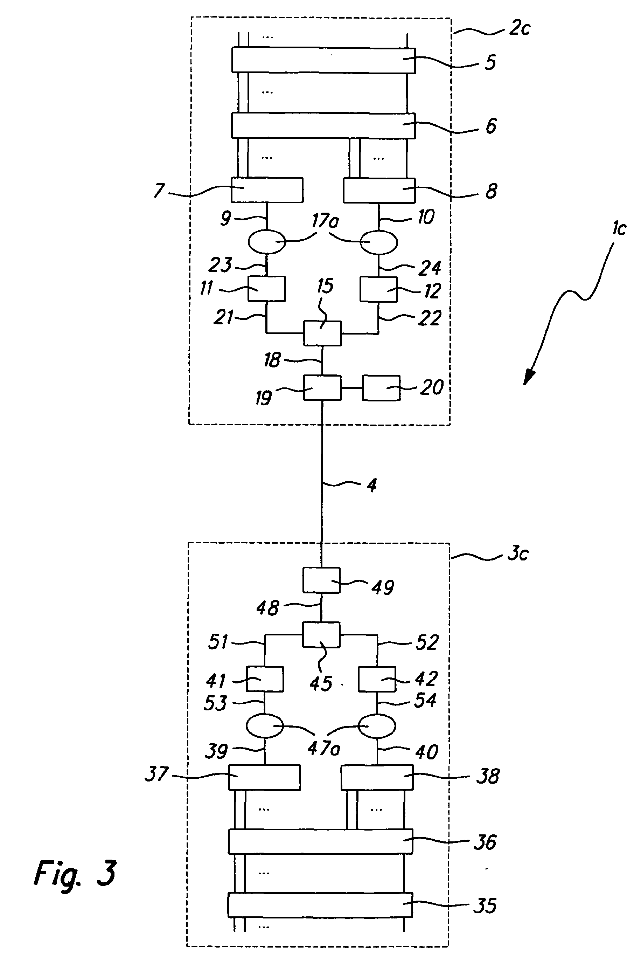

Figure 3 shows a system 1c comprising transmitter 2c and receiver 3c, realizing another embodiment. Transmitter 2c comprises two non-linear functionalities 17a that are also located in the complex-valued data path. However, non-linear functionalities 17a are now located in the digital domain which means that they modulate complex-valued digital data signals 9, 10 in order to generate modified complex-valued digital data signals 23, 24. It is in particular conceivable that the non-linear functionalities 17a are part of the digital/analog converters 11, 12, e. g. by generating analog waveforms that realize more or less equidistant levels of the different amplitudes.

Again, receiver 3c is designed in correspondence with transmitter 2c. Thus, receiver 3c comprises non-linear functionalities 47a that are located in the digital domain of the complex-valued data path.

Systems 1a, 1b, and 1c exemplify several embodiments of the present invention, in order to show the basic concepts. Further embodiments could in particular include a system comprising a transmitter and a receiver, wherein the design of the receiver does not totally correspond to the design of the transmitter. For example it is conceivable that transmitter 2c transmits optical data signals that are received by receiver 3a. Of course, several further combinations are conceivable.

In further embodiments, the transmitter 2a, 2b, and 2c as well as the receiver 3a, 3b, and 3c might comprise several further components as are commonly known in the art. For example, the transmitter 2a, 2b, and 2c and/or the receiver 3a, 3b, and 3c might comprise optical filters or further amplifiers. Further more, the signals might be modulated according to several further modulation schemes.

## Claims

1. Method for optical data transmission comprising the step of generating a data signal (9, 10, 13, 14, 16) utilizing orthogonal frequency division multiplexing, modulating an optical signal based on characteristics of the data signal (9, 10, 13, 14, 16), and transmitting the modulated optical signal,
**characterized in that** the method further comprises
- generating a modified data signal (18, 21, 22, 23, 24) by applying a first non-linear functionality (17a) to the data signal (9, 10, 13, 14, 16), the first non-linear functionality (17a) at least causing lower amplitudes of the data signal (9, 10, 13, 14, 16) to be amplified and not causing at least the highest amplitude to be amplified; and
- modulating the optical signal based on characteristics of the modified data signal (18, 21, 22, 23, 24).

2. The method of claim 1, **characterized in that** the degree of amplification depends on the amplitude of the data signal (9, 10, 13, 14, 16).

3. The method of claim 1 or claim 2, **characterized in that** applying the first non-linear functionality (17a) further causes higher amplitudes of the data signal (9, 10, 13, 14, 16) to be attenuated.

4. The method of claim 3, **characterized in that** the degree of attenuation depends on the amplitude of the data signal (9, 10, 13, 14, 16).

5. The method of anyone of the preceding claims, **characterized in that** the first non-linear functionality (17a) comprises
- a logarithmic function or
- a power function.

6. The method of anyone of the preceding claims, **characterized in that** the method further comprises the steps of generating complex-valued parallel analog data signals (13, 14), electrically mixing the complex-valued parallel analog data signals (13, 14) and generating the modified data signal (18) by modifying the electrically mixed analog data signal (16).

7. The method of anyone of claims 1 to 5, **characterized in that** the method further comprises the steps of generating complex-valued parallel analog data signals (13, 14) and generating the modified data signal (18) by modifying the complex-valued parallel analog data signals (13, 14) and electrically mixing the modified parallel analog data signals (21, 22).

8. The method of anyone of claims 1 to 5, **characterized in that** the method further comprises the steps of generating complex-valued parallel digital data signals (9, 10) and generating the modified data signal by modifying the complex-valued digital data signals (9, 10), converting the modified digital data signals (23, 24) into modified analog data signals (21, 22) and generating the modified data signal (18) by electrically mixing the modified analog data signals (21, 22).

9. The method of claim 8, **characterized in that** the non-linear functionality (17a) is realized by a digital function.

10. The method of claim 8, **characterized in that** the non-linear functionality (17a) is realized by applying non-equidistant levels for converting the digital data signals (9, 10) into modified analog data signals (21, 22).

11. The method of anyone of the preceding claims, **characterized in that** the method further comprises the steps of
- receiving the optical signal;
- converting the received optical signal into a received data signal (48);
- generating a de-modified data signal (39, 40, 43, 44, 46, 51, 52, 53, 54) by at least implicitly applying a second non-linear functionality (47) to the received data signal (48), the second non-linear functionality (47, 47a) at least causing lower amplitudes of the data signal to be attenuated and not causing at least the highest amplitude to be attenuated;
- generating de-multiplexed parallel data signals based on the de-modified data signal (39, 40, 43, 44, 46, 51, 52, 53, 54).

12. The method of claim 11, **characterized in that** applying the second non-linear functionality (47, 47a) further causes higher amplitudes of the received data signal (48) to be amplified.

13. The method of claim 11 or 12, **characterized in that** the second non-linear functionality (47, 47a) comprises a function that is realized
- as the inverse of the first non-linear functionality (17a); or
- as the quasi-inverse of the first non-linear functionality (17a).

14. The method of anyone of claim 11 to 13, **characterized in that** the second non-linear functionality (47, 47a) is adapted to at least one characteristic of a determined optical noise.

15. The method of anyone of claim 11 to 14, **characterized in that** the method further comprises the step of generating complex-valued parallel data signals (39, 40, 43, 44, 51, 52, 53, 54) by splitting the de-modified data signal (46) and generating the de-modified complex-valued parallel data signals (39, 40, 43, 44, 51, 52, 53, 54) based on the de-modified data signal (46).

16. The method of anyone of claim 11 to 14, **characterized in that** the method further comprises the step of generating complex-valued parallel analog data signals (51, 52) by splitting the received data signal (48) and generating de-modified complex-valued parallel data signals (43, 44) by applying the second non-linear functionality (47, 47a) to the complex-valued parallel analog data signals (51, 52).

17. The method of anyone of claim 11 to 14, **characterized in that** the method further comprises the steps of generating complex-valued parallel analog data signals (51, 52) by splitting the received data signal (48), generating complex-valued parallel digital data signals (53, 54) by converting the complex-valued parallel analog data signals (51, 52), and generating de-modified digital data signals (39, 40) by modifying the complex-valued parallel digital data signals (53, 54).

18. The method of claim 17, **characterized in that** the second non-linear functionality (47a) is realized by a digital function.

19. The method of claim 17, **characterized in that** the second non-linear functionality (47a) is realized by applying non-equidistant levels for converting the complex-valued parallel analog data signals (51, 52) into de-modified digital data signals (39, 40).

20. Transmitter (2a, 2b, 2c) for optical data transmission using Orthogonal Frequency Division Multiplexing, the transmitter (2a, 2b, 2c) comprising a modulator (19) for modulating an optical signal based on characteristics of a data signal (9, 10, 13, 14, 16), the data signal (9, 10, 13, 14, 16) comprising lower amplitudes and higher amplitudes,
**characterized in that**
the transmitter (2a, 2b, 2c) comprises a modifier for generating a modified data signal (18, 21, 22, 23, 24), the modifier realizing a first non-linear function (17a), wherein the modifier is adapted to amplify at least the lower amplitudes and to not amplify at least the highest amplitude,
the modulator (19) is adapted to modulate the optical signal based on characteristics of the modified data signal (18, 21, 22, 23, 24).

21. The transmitter (2a, 2b, 2c) of claim 20, **characterized in that** the transmitter (2a, 2b, 2c) further comprises means (5, 6, 8) for generating complex-valued parallel data signals (9, 10) and an electrical mixer (15) for electrically mixing complex-valued parallel analog data signals (13, 14, 21, 22) and the transmitter (2a, 2b, 2c) is adapted to execute a method according to any one of claims 1 to 10.

22. Receiver (3a, 3b, 3c) for receiving an optical orthogonal frequency division multiplexed signal, the receiver (3a, 3b, 3c) comprising an optical/electrical converter (49) for converting the received optical signal into a received data signal (48), the received data signal (48) comprising lower amplitudes and higher amplitudes,
**characterized in that**
the receiver (3a, 3b, 3c) comprises a modifier realizing a non-linear function (47, 47a), wherein the modifier is adapted to attenuate at least the lower amplitudes and to not attenuate at least the highest amplitude of the received data signal.

23. The receiver (3a, 3b, 3c) of claim 22, **characterized in that** the receiver (3a, 3b, 3c) further comprises splitting means (45) for splitting a data signal (46, 48) into complex-valued parallel data signals (43, 44, 51, 52) and the receiver (3a, 3b, 3c) is adapted to execute a method according to any one of claims 11 to 19.

24. System (1a, 1b, 1c) for optical data transmission, the system comprising a transmitter (2a, 2b, 2c) for optical data transmission using Orthogonal Frequency Division Multiplexing and a receiver (3a, 3b, 3c) for receiving an optical orthogonal frequency division multiplexed signal from the transmitter (2a, 2b, 2c), the transmitter (2a, 2b, 2c) comprising a modulator (19) for modulating an optical signal based on characteristics of a data signal (9, 10, 13, 14, 16), the data signal (9, 10, 13, 14, 16) comprising lower amplitudes and higher amplitudes, the receiver (3a, 3b, 3c) comprising an optical/electrical converter (49) for converting the received optical signal into an electrical received data signal (48) comprising lower amplitudes and higher amplitudes,
**characterized in that**
- the transmitter (2a, 2b, 2c) comprises a first modifier realizing a first non-linear function (17a), wherein the first modifier is adapted to amplify at least a part of the lower amplitudes and to not amplify the highest amplitude;
- the modulator (19) is adapted to modulate the optical signal based on characteristics of the modified data signal;
- the receiver (3a, 3b, 3c) comprises a second modifier realizing a second non-linear function (47, 47a), wherein the second modifier is adapted to attenuate at least a part of the lower amplitudes and to not attenuate at least the highest amplitude of the received data signal (48).

25. The system (1a, 1b, 1c) of claim 24, **characterized in that**
- the transmitter (2a, 2b, 2c) further comprises means for generating complex-valued parallel data signals and an electrical mixer for electrically mixing complex-valued parallel data signals;
- the transmitter (2a, 2b, 2c) is adapted to execute a method according to any one of claims 1 to 10;
- the receiver (3a, 3b, 3c) further comprises an electrical splitter (45) for splitting a data signal into complex-valued parallel received data signals and the receiver (3a, 3b, 3c) is adapted to execute a method according to any one of claims 11 to 19.

## Amended claims

### Amended claims in accordance with Rule 137(2) EPC.

**1.** Method for optical data transmission comprising the step of generating a data signal (9, 10, 13, 14, 16) utilizing orthogonal frequency division multiplexing, generating a modified data signal (18, 21, 22, 23, 24) by applying a first non-linear functionality (17a) to the data signal (9, 10, 13, 14, 16), modulating an optical signal based on characteristics of the data signal (9, 10, 13, 14, 16), transmitting the modulated optical signal, receiving the optical signal, and converting the received optical signal into a received data signal (48),
**characterized in that**
- the first non-linear functionality (17a) generates the modified data signal (18, 21, 22, 23, 24) at least by causing lower amplitudes of the data signal (9, 10, 13, 14, 16) to be amplified and not causing at least the highest amplitude to be amplified;
- modulating the optical signal based on characteristics of the modified data signal (18, 21, 22, 23, 24);
- transmitting the modulated data signal;
- receiving the modulated data signal;
- generating a de-modified data signal (39, 40, 43, 44, 46, 51, 52, 53, 54) by at least implicitly applying a second non-linear functionality (47) to the received data signal (48), the second non-linear functionality (47, 47a) at least causing lower amplitudes of the data signal to be attenuated and not causing at least the highest amplitude to be attenuated;
- generating de-multiplexed parallel data signals based on the de-modified data signal (39, 40, 43, 44, 46, 51, 52, 53, 54).

**2.** The method of claim 1, **characterized in that** the degree of amplification caused by the first linear functionality (17a) depends on the amplitude of the data signal (9, 10, 13, 14, 16).

**3.** The method of claim 1 or claim 2, **characterized in that** applying the first non-linear functionality (17a) further causes higher amplitudes of the data signal (9, 10, 13, 14, 16) to be attenuated and applying the second non-linear functionality (47, 47a) further causes higher amplitudes of the received data signal (48) to be amplified.

**4.** The method of claim 3, **characterized in that** the degree of attenuation caused by the first linear functionality (17a) depends on the amplitude of the data signal (9, 10, 13, 14, 16).

**5.** The method of anyone of the preceding claims, **characterized in that** the first non-linear functionality (17a) comprises
- a logarithmic function or
- a power function.

**6.** The method of anyone of the preceding claims, **characterized in that** the method further comprises the steps of generating complex-valued parallel analog data signals (13, 14), electrically mixing the complex-valued parallel analog data signals (13, 14) and generating the modified data signal (18) by modifying the electrically mixed analog data signal (16).

**7.** The method of anyone of claims 1 to 5, **characterized in that** the method further comprises the steps of generating complex-valued parallel analog data signals (13, 14) and generating the modified data signal (18) by modifying the complex-valued parallel analog data signals (13, 14) and electrically mixing the modified parallel analog data signals (21, 22).

**8.** The method of anyone of claims 1 to 5, **characterized in that** the method further comprises the steps of generating complex-valued parallel digital data signals (9, 10) and generating the modified data signal by modifying the complex-valued digital data signals (9, 10), converting the modified digital data signals (23, 24) into modified analog data signals (21, 22) and generating the modified data signal (18) by electrically mixing the modified analog data signals (21, 22).

**9.** The method of claim 8, **characterized in that** the first non-linear functionality (17a) is realized by a digital function.

**10.** The method of claim 9, **characterized in that** the non-linear functionality (17a) is realized by applying non-equidistant levels for converting the digital data signals (9, 10) into modified analog data signals (21, 22).

**11.** The method of anyone of claims 1 to 10, **characterized in that** the second non-linear functionality (47, 47a) comprises a function that is realized
- as the inverse of the first non-linear functionality (17a); or
- as the quasi-inverse of the first non-linear functionality (17a).

**12.** The method of anyone of anyone of claims 1 to 11, **characterized in that** the second non-linear functionality (47, 47a) is adapted to at least one characteristic of a determined optical noise.

**13.** The method of anyone of anyone of claims 1 to 12, **characterized in that** the method further comprises the step of generating complex-valued parallel data signals (39, 40, 43, 44, 51, 52, 53, 54) by splitting the de-modified data signal (46) and generating the de-modified complex-valued parallel data signals (39, 40, 43, 44, 51, 52, 53, 54) based on the de-modified data signal (46).

**14.** The method of anyone of anyone of claims 1 to 12, **characterized in that** the method further comprises the step of generating complex-valued parallel analog data signals (51, 52) by splitting the received data signal (48) and generating de-modified complex-valued parallel data signals (43, 44) by applying the second non-linear functionality (47, 47a) to the complex-valued parallel analog data signals (51, 52).

**15.** The method of anyone of anyone of claims 1 to 12, **characterized in that** the method further comprises the steps of generating complex-valued parallel analog data signals (51, 52) by splitting the received data signal (48), generating complex-valued parallel digital data signals (53, 54) by converting the complex-valued parallel analog data signals (51, 52), and generating de-modified digital data signals (39, 40) by modifying the complex-valued parallel digital data signals (53, 54).

**16.** The method of claim 15, **characterized in that** the second non-linear functionality (47a) is realized by a digital function.

**17.** The method of claim 16, **characterized in that** the second non-linear functionality (47a) is realized by applying non-equidistant levels for converting the complex-valued parallel analog data signals (51, 52) into de-modified digital data signals (39, 40).

**18.** System (1a, 1b, 1c) for optical data transmission, the system comprising a transmitter (2a, 2b, 2c) for optical data transmission using Orthogonal Frequency Division Multiplexing and a receiver (3a, 3b, 3c) for receiving an optical orthogonal frequency division multiplexed signal from the transmitter (2a, 2b, 2c),
the transmitter (2a, 2b, 2c) comprising a first modifier realizing a first non-linear function (17a) and a modulator (19) for modulating an optical signal based on characteristics of a data signal (9, 10, 13, 14, 16), the data signal (9, 10, 13, 14, 16) comprising lower amplitudes and higher amplitudes,
the receiver (3a, 3b, 3c) comprising an optical/electrical converter (49) for converting the received optical signal into an electrical received data signal (48) comprising lower amplitudes and higher amplitudes,
**characterized in that**
- the first non-linear function is adapted to amplify at least a part of the lower amplitudes and to not amplify the highest amplitude;
- the modulator (19) is adapted to modulate the optical signal based on characteristics of the modified data signal;
- the receiver (3a, 3b, 3c) comprises a second modifier realizing a second non-linear function (47, 47a), wherein the second non-linear function (47, 47a) is adapted to attenuate at least a part of the lower amplitudes and to not attenuate at least the highest amplitude of the received data signal (48).

**19.** The system (1a, 1b, 1c) of claim 18, **characterized in that** the second non-linear functionality (47, 47a) comprises a function that is realized AS
- the inverse of the first non-linear functionality (17a) or
- the quasi-inverse of the first non-linear functionality (17a).

**20.** The system (1a, 1b, 1c) of claim 18 or claim 19, **characterized in that** the degree of the amplification caused by the first non-linear functionality depends on the amplitude of the data signal (9, 10, 13, 14, 16).

**21.** The system (1a, 1b, 1c) of anyone of claims 18 to 20,
**characterized in that**
the first non-linear functionality (17a) is further adapted to attenuate higher amplitudes of the data signal (9, 10, 13, 14, 16), wherein the attenuation depends on the amplitude of the data signal (9, 10, 13, 14, 16) and
the second non-linear functionality (47, 47a) is further adapted to amplify higher amplitudes of the received data signal (48).

**22.** The system (1a, 1b, 1c) of anyone of claims 18 to 21, **characterized in that** the first non-linear functionality (17a) comprises
- a logarithmic function or
- a power function.

**23.** The system (1a, 1b, 1c) of anyone of claims 18 to 22,
**characterized in that**
- the transmitter (2a, 2b, 2c) comprises an electrical mixer (15) adapted for electrically mixing complex-valued parallel analog data signals (13, 14) and the modifier is adapted to generate the modified data signal (18) by modifying the electrically mixed analog data signal (16);
- the transmitter comprises digital/analog converters (11, 12) for generating complex-valued parallel analog data signals (13, 14) and the modifier is adapted to generate the modified data signal (18) by modifying the complex-valued parallel analog data signals (13, 14) ; or
- the transmitter comprises parallel-to-serial converters (7, 8) for generating complex-valued parallel digital data signals (9, 10) and the modifier is adapted to generate the modified data signal by modifying the complex-valued digital data signals (9, 10), converting the modified digital data signals (23, 24) into modified analog data signals (21, 22) and generating the modified data signal (18) by electrically mixing the modified analog data signals (21, 22), wherein the first functionality (17a) is realized by a digital function, applying non-equidistant levels for converting the digital data signals (9, 10) into modified analog data signals (21, 22).

**24.** The system (1a, 1b, 1c) of anyone of claims 18 to 23, **characterized in that** the receiver (3a, 3b, 3c) further comprises splitting means (45) for splitting a data signal into complex-valued parallel received data signals and
- the receiver comprises a splitter (45) for generating complex-valued parallel data signals (39, 40, 43, 44, 51, 52, 53, 54) by splitting the de-modified data signal (46) and generating de-modified complex-valued parallel data signals (39, 40, 43, 44, 51, 52, 53, 54) based on the de-modified data signal (46);
- the receiver comprises a splitter (45) for generating complex-valued parallel analog data signals (51, 52) by splitting the received data signal (48) and the second non-linear functionality (47, 47a) is adapted for being applied to the complex-valued parallel analog data signals (51, 52) for generating de-modified complex-valued parallel data signals (43, 44); or
- the receiver comprises a splitter (45) for generating complex-valued parallel analog data signals (51, 52) by splitting the received data signal (48), the receiver comprises analog/digital converters (41, 42) for generating complex-valued parallel digital data signals (53, 54) by converting the complex-valued parallel analog data signals (51, 52), and the second non-linear functionality (47, 47a) is adapted for generating de-modified digital data signals (39, 40) by modifying the complex-valued parallel digital data signals (53, 54).

**25.** The system (1a, 1b, 1c) of anyone of claims 18 to 24, **characterized in that** the second non-linear functionality (47, 47a) is adapted to at least one characteristic of a determined optical noise.
